# FASCICULE DE BREVET EUROPEEN

(11) **EP 2 430 726 B1**
(45) Date de publication et mention de la délivrance du brevet: **03.07.2019**
(21) Numéro de dépôt: 10723641.6
(22) Date de dépôt: 11.05.2010
(51) Int. Cl.: H02K 1/14, H02K 29/03

(54) **MOTEUR ÉLECTRIQUE TRIPHASE À FAIBLE COUPLE DE DÉTENTE**
DREIPHASEN-ELEKTROMOTOR MIT GERINGEM RASTMOMENT
THREE-PHASE ELECTRIC MOTOR WITH LOW COGGING

(30) Priorité: 11.05.2009 FR 0902256
(43) Date de publication de la demande: 21.03.2012
(73) Titulaire: MMT SA, 6304 Zug (CH)
(72) Inventeur: PRUDHAM, Daniel, F-25220 Thise (FR); PFISTER, Pierre-Daniel, F-25000 Besancon (FR); RICHARD, Thibaut, F-70000 Vesoul (FR)
(74) Mandataire: IP Trust
(86) Numéro de dépôt international: PCT/FR2010/000363
(87) Numéro de publication internationale: WO 2010/130894

(56) Documents cités:
- EP-A2- 1 598 920
- DE-A1- 10 314 763
- JP-A- 2002 136 001
- US-A- 5 642 013
- US-A- 6 104 117
- US-A1- 2003 107 290
- US-A1- 2003 160 674
- US-A1- 2005 088 047

## Description

La présente invention concerne un moteur électrique triphasé utilisant des aimants permanents à hautes performances et présentant un faible couple de détente, notamment pour des applications d'entraînement à haute vitesse dans le domaine industriel ou automobile.

### Etat de la technique antérieure

Les exigences en terme d'encombrement et de performances des moteurs électriques conduisent à l'emploi d'aimants à haute énergie pour la réalisation des rotors et plus on augmente l'énergie des matériaux employés, plus la maîtrise des couples résiduels de ces moteurs devient difficile.

Le coût de ces moteurs dépend non seulement des coûts des matériaux employés mais aussi des coûts des procédés de réalisation des différents éléments. Il est donc important de mettre en oeuvre des solutions simples pour la réalisation des pièces détachées et pour l'assemblage des différents composants de ces moteurs. En particulier la maîtrise des couples résiduels peut amener à des formes de stators incompatibles avec les procédés les plus économiques de bobinage. En outre l'utilisation de ces moteurs à des vitesses élevées nécessite d'utiliser un faible nombre de paires de pôles pour le rotor de manière à diminuer les pertes dans le moteur et dans l'électronique.

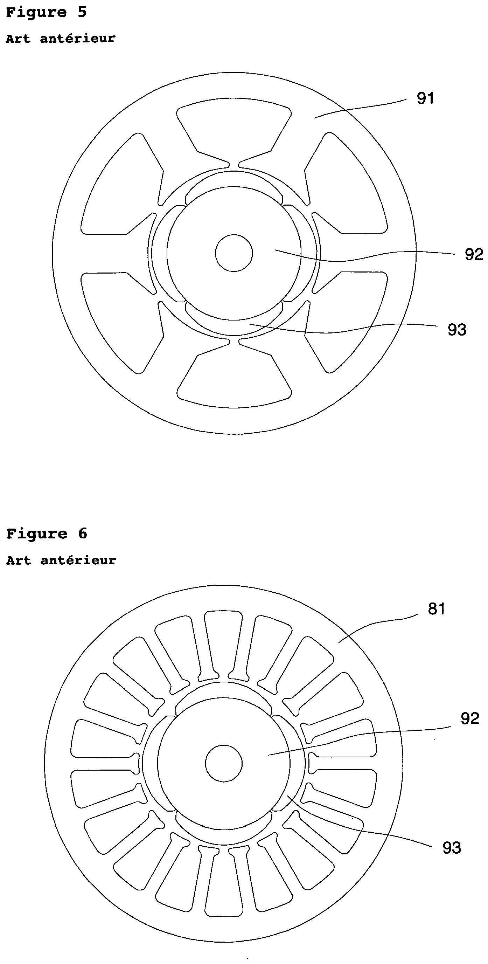

Les figures 5 et 6 décrivent des moteurs de l'art antérieur permettant d'obtenir des faibles couples résiduels avec des rotors présentant un faible nombre de paires de pôles.

Le moteur de la figure 5 utilise un rotor à 2 paires de pôles et un stator à 6 dents (91). Les pôles statoriques occupent 90% de la surface disponible et permettent ainsi d'obtenir un faible couple résiduel. La faible largeur d'encoche conduit à un bobinage long et difficile, donc coûteux et avec en plus un mauvais coefficient de remplissage.

Le moteur de la figure 6 utilise également un rotor à 2 paires de pôles et par rapport au moteur de la figure 5, chaque pôle statorique est divisé en 3 dents. Un bobinage statorique entoure alors 3 dents du stator pour former un seul pôle. Les 18 dents statoriques occupent 70% de la surface disponible et permettent ainsi d'obtenir un faible couple résiduel, mais obligent à un bobinage imbriqué des 3 phases, donc long et coûteux, et pas adapté à la réalisation en très grande série.

On connaît également dans l'état de la technique l'utilisation de rotors présentant une induction sinusoïdale et qui permettent grâce à cela de réduire les couples résiduels. Mais pour obtenir des valeurs de couples résiduels telles que celles demandées par la plupart des applications industrielles ou automobiles, l'induction de ces rotors doit présenter une très faible distorsion. La décomposition harmonique de l'induction de ces rotors doit montrer des pourcentages d'harmonique 3, d'harmonique 5 et d'harmonique 7 très faibles, notamment pour les 2 derniers. En particulier, en utilisant des aimants à haute énergie, les pourcentages d'harmonique 5 et d'harmonique 7 doivent être inférieurs à 0.5%. Si les pourcentages d'harmoniques 5 et 7 sont de l'ordre de ou supérieurs à 0.5%, il est nécessaire de coupler ces solutions de rotor avec une solution de stator appropriée en terme de réduction des couples résiduels.

Les moteurs des figures 5 et 6 utilisent parfois des rotors présentant une induction sinusoïdale.

Le document US 6 104 117 décrit un moteur électrique selon le préambule de la revendication 1.

### Résumé de l'invention :

La présente invention vise à remédier aux inconvénients de l'état de la technique en proposant une structure de moteur, particulièrement appropriée à une fabrication en très grande série, adaptée aux aimants à très haute énergie, utilisant un faible nombre de paires de pôles, typiquement 2, un nombre réduit de bobinages, typiquement 3, et présentant un très faible couple résiduel ainsi que des performances élevées à haute vitesse.

La présente invention propose un moteur robuste, présentant un faible couple de détente, d'excellentes performances dynamiques, et particulièrement économique grâce à une structure simple au stator comme au rotor.

Le moteur de l'invention est défini par la revendication 1.

D'autres caractéristiques, optionnelles mais avantageuses, sont définies dans les revendications dépendant directement ou indirectement de la revendication 1.

A ce titre, l'invention concerne un moteur triphasé formé par une partie statorique excitée par des bobines électriques et par un rotor à N paires de pôles, la partie statorique présentant des dents s'étendant radialement depuis une couronne annulaire. La largeur des pôles statoriques est déterminée d'une part pour éviter toute saturation dans la dent, d'autre part pour annuler l'effet des principales harmoniques de magnétisation et également de manière à permettre un bobinage économique en autorisant la mise en place de bobines réalisées en dehors du stator.

Les pôles statoriques sont des dents droites qui comportent un arc de cercle (17) à leur extrémité définissant un entrefer au centre de la dent et un entrefer qui peut être agrandi ou diminué sur chacun des côtés (18 et 19). Ceci signifie que l'extrémité de la dent peut être de forme convexe ou concave. La largeur du pôle statorique, qui est défini comme étant l'angle au centre qui englobe la totalité de la dent, et le rayon de l'arc de cercle (17) qui forme l'extrémité de la dent sont déterminés de manière à obtenir pour chaque dent un couple résiduel le plus faible possible. La largeur de la dent formant le noyau de bobine est définie en fonction de l'énergie maximale des aimants utilisés. Cette énergie peut aller de 6 à 40 MGOe, mais les pôles statoriques représentent dans tous les cas moins de 60% de la surface disponible. Ainsi la facilité de bobinage est garantie.

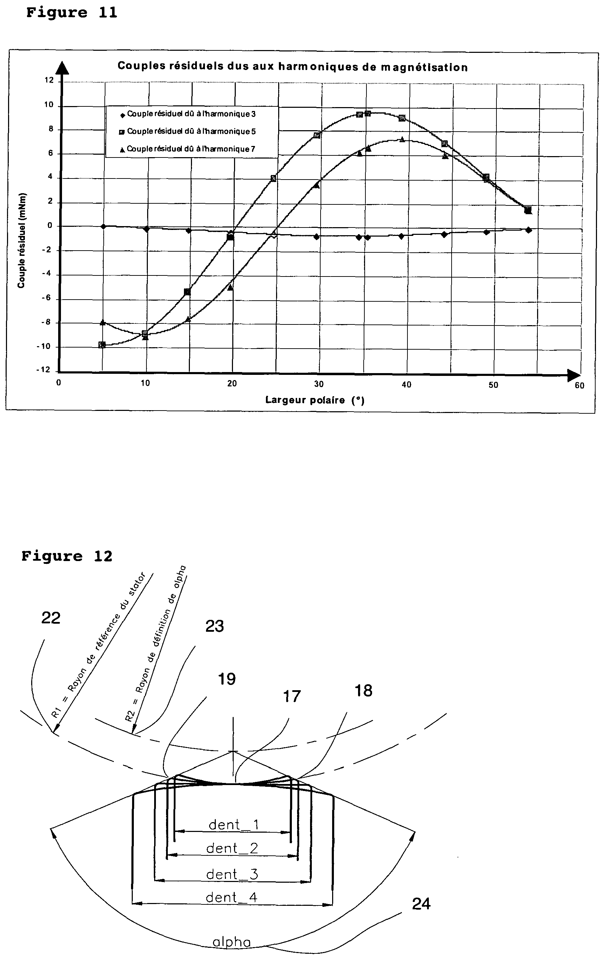

Comme le montre la figure 12, si la géométrie de l'extrémité de la dent est adaptée en fonction de l'énergie des aimants et en fonction des harmoniques de magnétisation, elle respecte cependant toujours une même règle qui permet de définir un angle alpha (24) qui tangente les côtés (18 et 19) du pôle statorique.

L'annulation du couple résiduel étant obtenue pour chacune des dents individuellement, il n'est pas besoin de rechercher une compensation de couple entre 2 dents ou un groupe de dents comme dans certains moteurs de l'art antérieur. De nouvelles combinaisons entre nombre de dents du stator et nombre de paires de pôles du rotor deviennent utilisables en conservant tous les avantages en terme de couple résiduel, de constante de couple moteur et de facilité d'industrialisation et représentent donc un meilleur compromis en terme de coût et de performance, notamment pour des applications d'entraînement à haute vitesse.

### Brève description des figures

L'invention sera mieux comprise à la lecture de la description ci-après de modes de réalisation connus ou spécifiques à l'invention et donnés à titre d'exemples non limitatifs, cette description faisant référence aux dessins annexés où :
La figure 1 représente une vue en coupe transversale d'un moteur selon l'invention. Le moteur comporte un stator (1) présentant 6 dents (11 à 16) et un rotor (2) constitué d'un aimant de forme (4) injecté sur une culasse ferromagnétique (3).
La figure 2 représente une vue en coupe transversale du stator du moteur représenté en figure 1. La largeur polaire (21) est d'environ 30% du pas polaire statorique (22) et l'extrémité de la dent est de forme concave.
La figure 3 représente une vue en coupe transversale d'un moteur selon l'invention. Le moteur comporte un stator (1) présentant 6 dents (31 à 36) et un rotor (2) constitué de 4 tuiles de forme (4A, 4B, 4C et 4D) assemblées sur une culasse ferromagnétique (3).
La figure 4 représente une vue en coupe transversale du stator du moteur représenté en figure 3. La largeur polaire (21) est d'environ 50% du pas polaire statorique (22) et l'extrémité de la dent (25) est de forme convexe.
La figure 5 représente une vue en coupe transversale d'un moteur de l'art antérieur. Le moteur comporte un stator (91) présentant 6 dents et un rotor constitué de 4 tuiles de forme (93) assemblées sur une culasse ferromagnétique (92). Les pôles statoriques occupent environ 90% de la surface disponible.
La figure 6 représente une vue en coupe transversale d'un autre moteur de l'art antérieur. Le stator (81) comporte 18 dents qui occupent environ 70% de la surface disponible.
La figure 7 représente une vue en coupe transversale d'un rotor à 2 paires de pôles constitué de 4 tuiles (4A, 4B, 4C et 4D) réalisées dans un matériau magnétique anisotrope et collées sur une culasse ferromagnétique (3).
La figure 8 représente une vue en coupe transversale d'un rotor à 2 paires de pôles constitué d'une bague (5) réalisée dans un matériau magnétique isotrope, aimantée de manière sinusoïdale, et collée sur une culasse (3) .
La figure 9 représente un graphique montrant l'amplitude de l'induction normale et de l'induction tangentielle en fonction de la position d'un rotor tel que décrit en figure 7.
La figure 10 montre la décomposition harmonique de l'induction normale ou tangentielle d'un rotor tel que décrit en figure 7.
La figure 11 représente l'évolution des couples résiduels dus aux différents harmoniques de magnétisation, dans le cas d'un stator 6 dents (11 à 16) et d'un rotor 2 paires de pôles, en fonction de la largeur du pôle statorique (21).
La figure 12 représente différentes géométries de dent et montre que le milieu de l'arc (17) formant l'extrémité de dent est toujours placé sur un même rayon R1 (22) et qu'un même angle alpha (24), dont le sommet est situé sur un rayon R2 (23), tangente les côtés (18 et 19) des dents (dent_1 à dent_4).
La figure 13 représente un graphique montrant l'évolution du couple résiduel dû à l'harmonique 5 de magnétisation, dans le cas d'un stator 6 dents et d'un rotor 2 paires de pôles, en fonction de la largeur du pôle statorique (21) et pour différentes géométries de la dent statorique.
La figure 14 représente un graphique montrant l'évolution de la constante moteur Km, qui est le couple par racine de watts que peut fournir le moteur, en fonction de la largeur de pôle statorique (21).
La figure 15 représente une vue en coupe transversale d'un moteur selon l'invention et comportant un rotor à 4 paires de pôles. Le moteur comporte un stator présentant 12 dents (101 à 112) et un rotor constitué d'un aimant de forme (4) injecté sur une culasse ferromagnétique (3) .
La figure 16 représente différentes formes de dents statoriques pour des moteurs comportant respectivement des rotors à 2, 4 ou 8 paires de pôles.

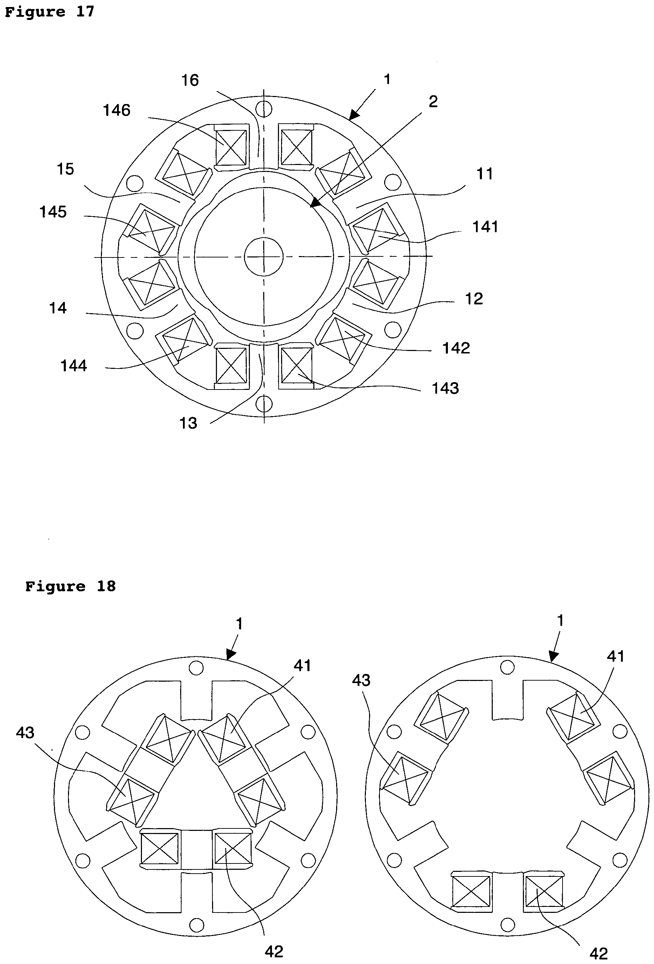

La figure 17 représente une vue en coupe transversale d'un moteur selon l'invention. Le moteur comporte un stator (1) présentant 6 dents (11 à 16) et un rotor (2) à 2 paires de pôles; chacune des dents porte un bobinage (141 à 146).
La figure 18 représente une vue en coupe transversale d'un stator (1) d'un moteur selon l'invention, avant et après l'insertion des bobines. Le stator présente 6 dents et une dent sur deux porte une bobine. Les 3 bobines (41 à 43) peuvent être bobinées séparément, puis présentées simultanément à l'intérieur du stator et insérées sur leur dent respective.
La figure 19 représente une vue en coupe transversale d'un moteur à rotor extérieur selon l'invention. Le stator (201), comportant 6 dents (211 à 216) et 3 bobinages (241 à 243), se trouve à l'intérieur d'un rotor (202) constitué de 4 tuiles d'aimant (204A à 204B) montées dans une culasse ferromagnétique (203).

### Description détaillée

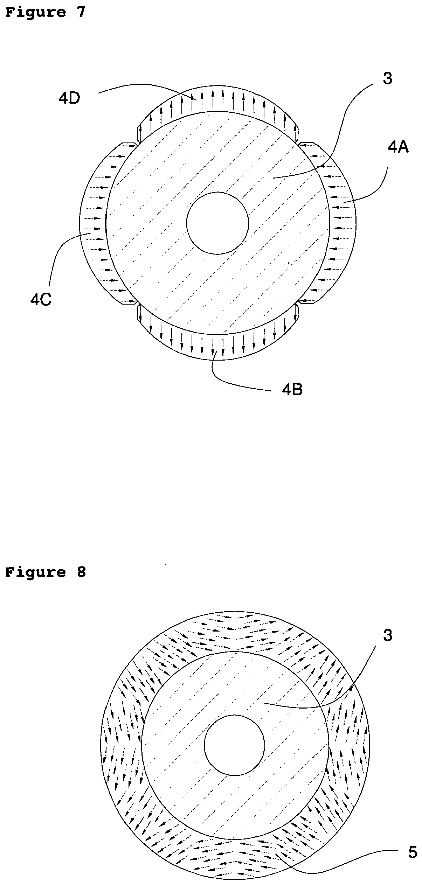

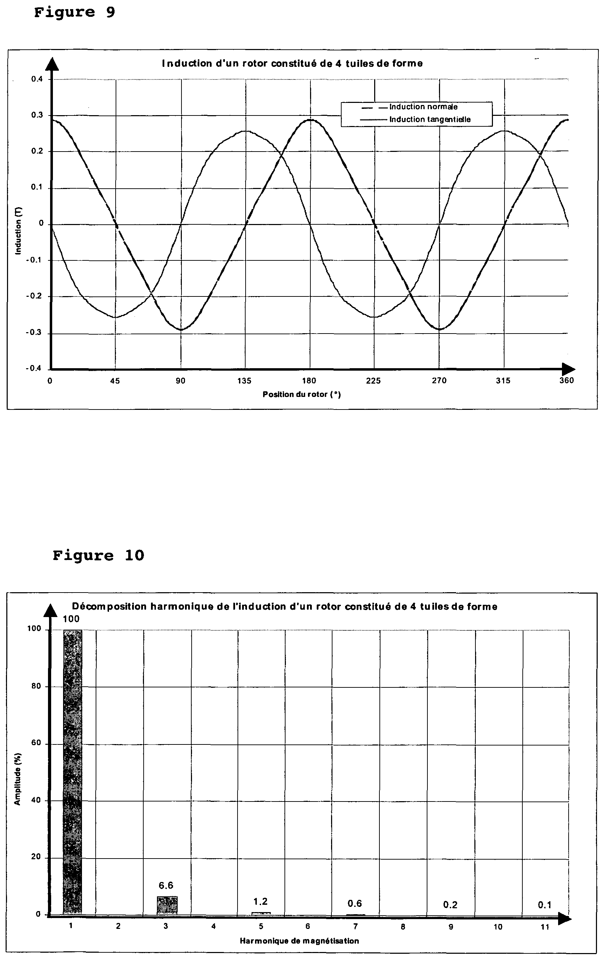

Une des solutions utilisée pour réaliser un rotor est représentée sur la figure 7, ce rotor présentant alors une induction sinusoïdale. Quatre tuiles d'aimant (4A, 4B, 4C et 4D) sont collées sur une culasse en fer (3). La forme extérieure de ces tuiles permet de s'approcher d'une induction sinusoïdale, même si l'aimantation de chacune des tuiles est réalisée selon une direction unique. Pour des raisons de coût la géométrie de cette tuile doit cependant rester simple et les tolérances de fabrication amènent des différences entre chacun des pôles du rotor. En pratique on obtient donc une induction telle que celle représentée en figure 9. La décomposition harmonique, que montre la figure 10, fait apparaître alors des pourcentages qui sont de 6.6% pour l'harmonique 3, de 1.2% pour l'harmonique 5 et de 0.6% pour l'harmonique 7. L'objet de la présente invention est de proposer un moteur simple et économique qui permettra d'utiliser des rotors avec des pourcentages d'harmonique de magnétisation de cet ordre de grandeur, tout en obtenant des couples résiduels très faibles et sans les inconvénients concernant le bobinage imposés par les solutions de l'art antérieur.

La figure 11 montre, pour un moteur ayant 6 dents au stator et 2 paires de pôles au rotor, l'évolution des couples résiduels dus à chacun des harmoniques de magnétisation en fonction de la largeur de pôle statorique, dans le cas d'un pôle statorique de forme (dent_2) tel que décrit figure 12. Pour cette forme (dent_2) le rayon de l'arc de cercle (17) formant l'extrémité de la dent est égal au rayon de référence du stator R1 (22). Si l'on considère des harmoniques de même amplitude, on remarque que le couple résiduel dû à l'harmonique 3 est beaucoup plus faible que celui dû à l'harmonique 5 et de même que celui dû à l'harmonique 7.

Le couple résiduel dû à l'harmonique 3 est maximum pour des largeurs de pôle statorique comprises entre 30 et 35°. Il diminue progressivement si on élargit ou si on rétrécit la largeur de pôle.

Le couple résiduel dû à l'harmonique 5 est maximum pour une largeur de pôle de 35° ou pour un pôle très étroit de 5°. Par contre ce couple résiduel est nul pour une largeur de dent de 20°.

Le couple résiduel dû à l'harmonique 7 est maximum pour une largeur de pôle de 38° ou pour un pôle étroit de 10°. Ce couple résiduel est nul pour une largeur de pôle de 26°.

Un moteur selon un mode de réalisation possible de l'invention et présentant des dents de forme (dent_2) comportera un stator (1) présentant 6 dents (11 à 16) ayant une largeur de pôle (21) comprise entre 20 et 26°. Entre 20 et 26°, les couples résiduels dus à l'harmonique 5 et à l'harmonique 7, comme le montre la figure 11, sont de signes opposés et se compensent mutuellement. Si l'on s'attend à ce que le rotor donne plus d'harmonique 5 que d'harmonique 7, on choisira une largeur de dent plus proche de 20°. Mais si l'on s'attend à ce que l'harmonique 7 soit supérieur à l'harmonique 5, on choisira une largeur de dent plus proche de 26°. Si les pourcentages d'harmoniques 5 et 7 sont de même ordre de grandeur, on choisira une largeur de pôle de 23°.

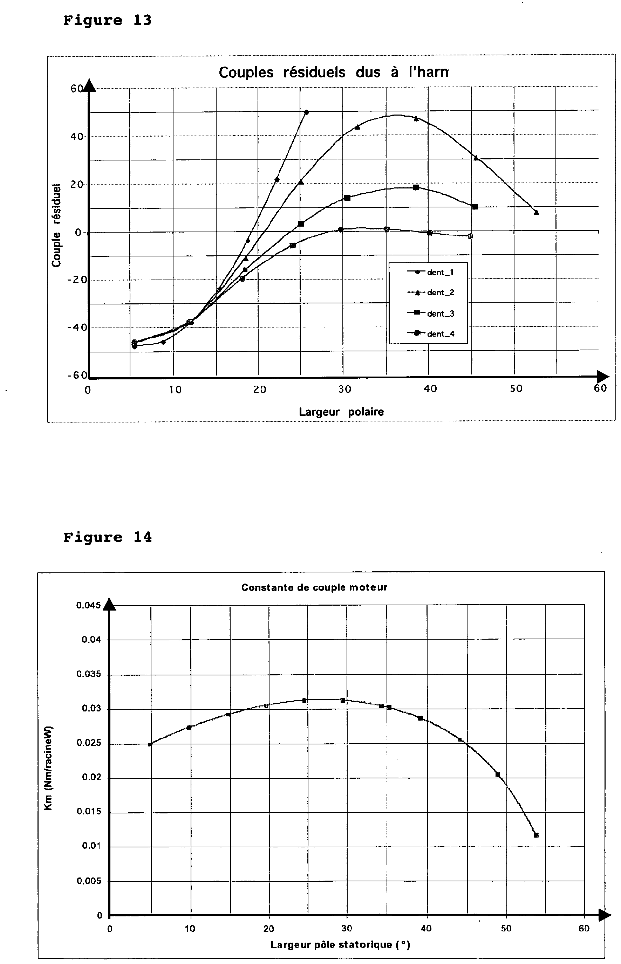

La figure 14 montre l'évolution de la constante moteur Km en fonction de la largeur du pôle statorique. Quand la dent est plus étroite, la constante de couple par ampère-tour diminue, mais le volume disponible pour le cuivre augmentant, la constante moteur Km, qui s'exprime en Nm par racine de watt, augmente. Elle est maximum entre 20 et 35°. Il y a donc avantage à utiliser des largeurs de pôles comprises entre 20 et 35°.

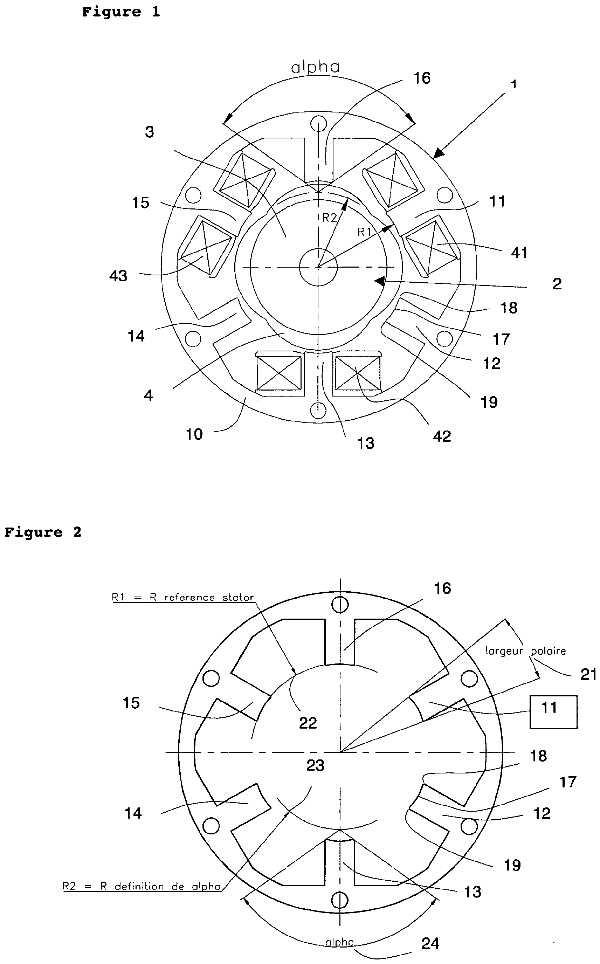

La figure 1 représente un mode de réalisation préférée selon l'invention. Le stator (1) est réalisé par un empilement de tôles magnétiques fines. Il comporte 6 dents (11 à 16) de largeur identique comprise entre 20 et 26°. Une dent sur deux porte une bobine (41 à 43). Le rotor (2) à 2 paires de pôles utilise un matériau magnétique ayant une énergie magnétique maximum inférieure à 25 MGOe. Il peut être obtenu par surmoulage d'un aimant à liant plastique sur une culasse en fer. Ce procédé de réalisation permet d'obtenir une forme extérieure de l'aimant qui conduira après aimantation à obtenir une induction sensiblement sinusoïdale en fonction de la position. La figure 8 représente un autre mode de réalisation du rotor qui est constitué d'une bague (5) réalisée dans un matériau isotrope. Cette bague (5) est d'abord aimantée de manière sinusoïdale à l'aide d'un outillage spécifique, puis collée sur une culasse (3) qui peut être ferromagnétique ou non.

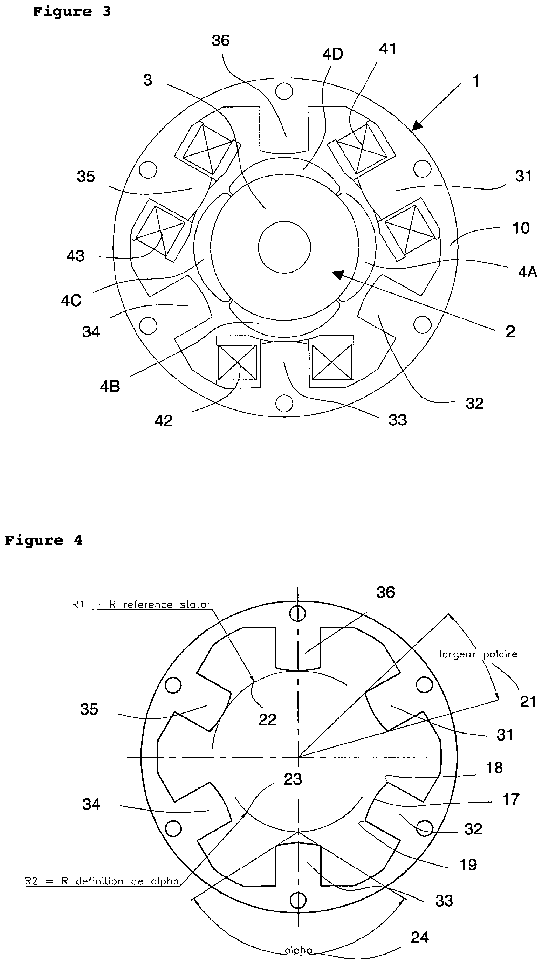

Le seul inconvénient à utiliser des dents étroites intervient avec des aimants ayant une énergie magnétique maximum supérieure à 25 MGOe car il apparaît alors une saturation dans la dent. Aussi dans un autre mode de réalisation selon l'invention (figure 3), la largeur du pôle statorique sera comprise entre 28 et 36° de manière à éviter la saturation en utilisant des aimants ayant des énergies maximum comprises entre 25 et plus de 40 MGOe. De manière à obtenir l'annulation des couples résiduels dus aux harmoniques 5 et 7, l'extrémité de la dent est convexe et prend la forme (dent_4) telle que décrite en figure 12.

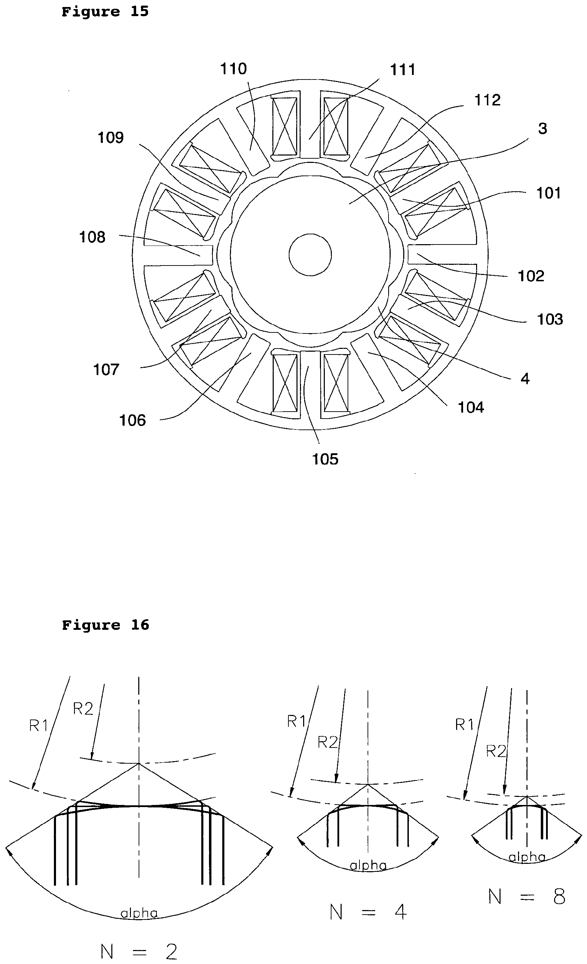

En effet le graphique présenté à la figure 13 montre comment la largeur polaire doit être adaptée en fonction de la forme de la dent pour toujours obtenir l'annulation du couple résiduel dû à l'harmonique 5. Par rapport à la forme (dent_2) on remarque qu'une dent de forme concave plus prononcée, telle que la forme (dent_1), sera de largeur polaire un peu inférieure pour obtenir l'annulation du couple résiduel. Par contre des dents de forme convexe comme (dent_3) et (dent_4) nécessiteront des largeurs polaires supérieures pour obtenir l'annulation du couple résiduel. En reportant les différentes dents obtenues sur un même dessin (figure 12) on remarque que, quelle que soit la dent, le milieu de l'arc de cercle (17) formant l'extrémité de dent est toujours situé sur R1 (22), rayon de référence du stator, et qu'un même angle alpha (24) dont le sommet est situé sur un rayon R2 (23) tangente les deux côtés (18 et 19) de la dent. Quand on fait varier N, qui est le nombre de paires de pôles du rotor, on s'aperçoit, comme le montre la figure 16, que la largeur polaire est inversement proportionnelle à N mais que l'angle alpha reste le même si l'on fait varier le rapport R2/R1 selon la relation R2/R1 = 1-0.26/N.

Pour obtenir l'annulation du couple résiduel dû à l'harmonique 5, l'angle alpha (24) doit être sensiblement égal à 110°. Pour l'harmonique 7, la même démarche peut être entreprise, et pour obtenir l'annulation du couple résiduel dû à l'harmonique 7, l'angle alpha (24) doit être sensiblement égal à 135°.

Donc selon l'invention, si un rotor présente beaucoup plus d'harmonique 5 que d'harmonique 7, l'angle alpha sera proche de 110°, et si l'harmonique 7 est très supérieur à l'harmonique 5, l'angle alpha sera proche de 135°. Si les harmoniques 5 et 7 ont des amplitudes voisines, l'angle alpha sera proche de 122°.

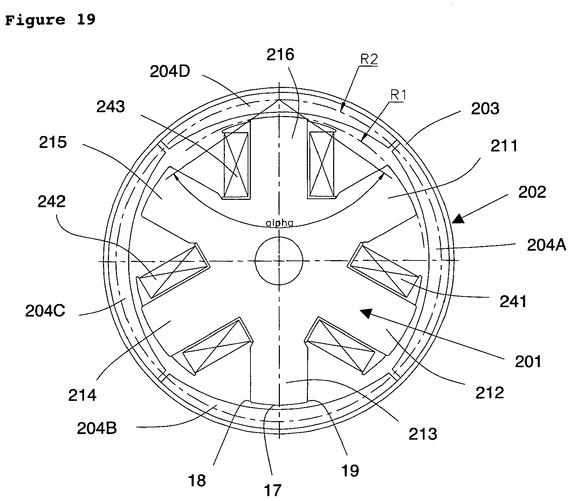

La figure 19 représente un mode de réalisation privilégié selon l'invention. La construction réalisée concerne un moteur à rotor extérieur(202), mais les mêmes règles concernant l'annulation des couples résiduels peuvent s'appliquer. La forme des dents (211 à 216) est également définie grâce à un arc de cercle (17) dont le milieu est situé sur un rayon R1 et à l'angle alpha dont le sommet est situé sur le rayon R2 et qui tangente les côtés (18 et 19) de la dent. Comme la structure est inversée, le rayon R2 est cette fois supérieur au rayon R1 et la relation qui relie R1 et R2 devient R2/R1 = 1+0.26/N. Le stator peut porter 3 bobines (241 à 243) ou 6 bobines selon le besoin de performance. Le rotor est constitué de 4 tuiles d'aimant (204A à 204D) ayant une forme permettant d'obtenir une induction radiale et une induction tangentielle sensiblement sinusoïdales.

## Revendications

1. Moteur électrique triphasé comportant un rotor (2) présentant N paires de pôles et une partie statorique (1), présentant 3xN dents (11 à 16) s'étendant radialement depuis une couronne annulaire (10), la partie statorique (1) étant excitée par des bobines électriques (41 à 43), chaque dent (11 à 16) présentant à son extrémité un arc de cercle (17) et deux côtés (18 et 19), le milieu de l'arc de cercle (17) étant situé sur un cercle avec un premier rayon R1, et les deux côtés (18 et 19) définissant un angle alpha (24) dont le sommet est situé sur un cercle avec un deuxième rayon R2, les centres des cercles avec les rayons R1 et R2 coïncident avec le centre de la partie statorique (1),
**caractérisé en ce que** le premier rayon R1 et le deuxième rayon R2 définissent un rapport R2/R1 égal à (1 +/- 0.26/N), et **en ce que** l'angle alpha est compris entre 110 et 135°, **en ce que** le rotor présente une induction normale et une induction tangentielle contenant chacune moins de 20% d'harmonique 3, moins de 2% d'harmonique 5 et moins de 2% d'harmonique 7.

2. Moteur électrique triphasé selon la revendication 1, **caractérisé en ce que** chaque extrémité de dent a une forme convexe.

3. Moteur électrique triphasé selon la revendication 2, **caractérisé en ce que** chaque extrémité de dent a une forme concave.

4. Moteur électrique triphasé, selon l'une quelconque des revendications 1 à 3, le stator (1) présentant un bobinage sur chacune des dents.

5. Moteur électrique triphasé, selon l'une quelconque des revendications 1 à 3, le stator (1) présentant un bobinage une dent sur deux.

6. Moteur électrique triphasé selon l'une quelconque des revendications précédentes, les bobines étant bobinées séparément puis insérées dans le stator.

7. Moteur électrique triphasé, selon l'une quelconque des revendications 1 à 6, le rotor (2) étant constitué d'un aimant (4) injecté sur une culasse (3) réalisée dans un matériau ferromagnétique.

8. Moteur électrique triphasé, selon l'une quelconque des revendications 1 à 6, le rotor (2) étant constitué de 4 tuiles 4A, 4B, 4C et 4D) réalisées dans un matériau anisotrope et assemblées sur une culasse (3) réalisée dans un matériau ferromagnétique.

9. Moteur électrique triphasé, selon l'une quelconque des revendications 1 à 6, le rotor (2) étant constitué d'un aimant bague (5) réalisé dans un matériau isotrope.

10. Moteur électrique triphasé, selon l'une quelconque des revendications 1 à 6, le rotor (2) étant constitué d'un aimant bague (5) comportant une anisotropie polaire.

11. Moteur électrique triphasé, selon l'une quelconque des revendications précédentes, **caractérisé en ce que** le stator (1) est constitué par un empilement de tôles fines.

12. Moteur électrique triphasé, selon l'une quelconque des revendications précédentes, **caractérisé en ce qu'**il comporte des éléments de détection de position agissant avec le rotor (2).

## Patentansprüche

1. Dreiphasen-Elektromotor mit Rotor (2), der N Polpaare und einen Statorteil (1) aufweist, welcher 3xN Zähne (11 bis 16) aufweist, die sich radial von einem ringförmigen Kranz (10) aus erstrecken, wobei der Statorteil (1) erregt wird durch elektrische Spulen (41 bis 43), wobei jeder Zahn (11 bis 16) an seinem Ende einen Kreisbogen (17) und zwei Seiten (18 und 19) aufweist, wobei sich die Mitte des Kreisbogens (17) in einem Kreis mit einem ersten Radius R1 befindet, und die beiden Seiten (18 und 19) einen Winkel alpha (24) abgrenzen, dessen Scheitel sich auf einem Kreis mit einem zweiten Radius R2 befindet, wobei sich die Mitten der Kreise mit den Radien R1 und R2 und die Mitte des Statorteils (1) decken, **dadurch gekennzeichnet, dass** der erste Radius R1 und der zweite Radius R2 ein Verhältnis R2/R1 gleich (1+/-0.26/N) bestimmen, und dadurch, dass der Winkel alpha zwischen 110 und 135° groß ist, und dadurch, dass der Rotor eine normale Induktion und eine tangentiale Induktion aufweist, die jeweils weniger als 20 % der 3. Harmonischen, weniger als 2 % der 5. Harmonischen und weniger als 2 % der 7. Harmonischen umfassen.

2. Dreiphasen-Elektromotor nach Anspruch 1, **dadurch gekennzeichnet, dass** jedes Zahnende eine konvexe Form hat.

3. Dreiphasen-Elektromotor nach Anspruch 2, **dadurch gekennzeichnet, dass** jedes Zahnende eine konkave Form hat

4. Dreiphasen-Elektromotor nach einem der Ansprüche 1 bis 3, wobei der Stator (1) eine Spule auf jedem der Zähne aufweist.

5. Dreiphasen-Elektromotor nach einem der Ansprüche 1 bis 3, wobei der Stator (1) auf jedem zweiten Zahn eine Spule aufweist.

6. Dreiphasen-Elektromotor nach einem der vorhergehenden Ansprüche, wobei die Spulen separat gespult und dann in den Stator eingesetzt werden.

7. Dreiphasen-Elektromotor nach einem der Ansprüche 1 bis 6, wobei der Rotor (2) aus einem Magneten (4) besteht, der auf einem aus ferromagnetischem Material hergestellten Zylinderkopf (3) aufgespritzt wurde.

8. Dreiphasen-Elektromotor nach einem der Ansprüche 1 bis 6, wobei der Rotor (2) aus vier Segmenten (4A, 4B, 4C und 4D) besteht, die aus einem anisotropen Material hergestellt und auf einem Zylinderkopf (3) bestehend aus ferromagnetischem Material montiert wurden.

9. Dreiphasen-Elektromotor nach einem der Ansprüche 1 bis 6, wobei der Rotor (2) aus einem Ringmagneten (5) besteht, der aus einem isotropen Material hergestellt ist.

10. Dreiphasen-Elektromotor nach einem der Ansprüche 1 bis 6, wobei der Rotor aus einem Ringmagneten (5) besteht, der eine polare Anisotropie umfasst.

11. Dreiphasen-Elektromotor nach einem der vorhergehenden Ansprüche, **dadurch gekennzeichnet, dass** der Stator (1) aus einer Stapelung dünner Bleche besteht.

12. Dreiphasen-Elektromotor nach einem der vorhergehenden Ansprüche, **dadurch gekennzeichnet, dass** er Positionserfassungselemente umfasst, die mit dem Motor (2) zusammenwirken.

## Claims

1. A three-phase electric motor comprising a rotor (2) having N pairs of poles and a stator part (1) having 3xN teeth (11 to 16) extending radially from an annular gear (10), with the stator part (1) being excited by electric coils (41 to 43), with each tooth (11 to 16) having, at the end thereof, an arc of a circle (17) and two sides (18 and 19), and two sides (18 and 19), with the middle of the arc of a circle (17) being located on a circle having a first radius R1, and with the two sides (18 and 19) defining an alpha angle (24), the apex of which is located on a circle having a second radius R2, with the centres of the circles having the radiuses R1 and R2 coinciding with the centre of the stator part (1),
**characterized in that** the first radius R1 and the second radius R2 define a ratio R2/R1 equal to (1+/- 0.26/N), and **in that** the alpha angle ranges from 110 to 135°, and **in that** the rotor has a normal induction and a tangential induction each containing less than 20% of third harmonic, less than 2% of fifth harmonic and less than 2% of seventh harmonic.

2. A three-phase electric motor according to claim 1, **characterized in that** each end of a tooth has a convex shape.

3. A three-phase electric motor according to claim 2, **characterized in that** each end of a tooth has a concave shape.

4. A three-phase electric motor according to any one of claims 1 to 3, wherein the stator (1) has a winding on each one of the teeth.

5. A three-phase electric motor according to any one of claims 1 to 3, wherein the stator (1) has a winding on every other tooth.

6. A three-phase electric motor according to any one of the preceding claims, wherein the coils are wound separately and then inserted into the stator.

7. A three-phase electric motor according to any one of claims 1 to 6, wherein the rotor (2) consists of a magnet (4) injected onto a yoke (3) made of a ferromagnetic material.

8. A three-phase electric motor according to any one of claims 1 to 6, wherein the rotor (2) consists of 4 tiles (4A, 4B, 4C and 4D) formed in an anisotropic material and assembled on a yoke (3) made of a ferromagnetic material.

9. A three-phase electric motor according to any one of claims 1 to 6, wherein the rotor (2) consists of a magnet ring (5) made of an isotropic material.

10. A three-phase electric motor according to any one of claims 1 to 6, wherein the rotor (2) consists of a magnet ring (5) having a polar anisotropy.

11. A three-phase electric motor according to any one of the preceding claims, wherein the stator (1) consists of a stack of thin sheets.

12. A three-phase electric motor according to any one of the preceding claims, **characterized in that** it comprises position detection elements acting with the rotor (2).
